# EUROPÄISCHE PATENTANMELDUNG

(11) **EP 0 541 082 A1**
(43) Veröffentlichungstag der Anmeldung: **12.05.1993**
(21) Anmeldenummer: 92118952.8
(22) Anmeldetag: 05.11.1992
(51) Int. Cl.: C04B 35/58

(54) **Hochfeste Siliciumnitridkeramik**

(30) Priorität: 07.11.1991 DE 4136629
(71) Anmelder: Hoechst CeramTec Aktiengesellschaft, D-95100 Selb (DE)
(72) Erfinder: Dillinger, Reinhard, Dr., W-8672 Selb (DE); Dötsch, Petra, W-8672 Selb (DE); Heinrich, Jürgen, Dr., W-8672 Selb (DE); Steiner, Matthias, W-8672 Selb (DE)
(74) Vertreter: Hoffmann, Peter, Dipl.-Chem.

(57) **Zusammenfassung**

Die Erfindung betrifft ein hochfestes Formteil aus Siliciumnitrid-Keramik, das durch Formgebung der keramischen Ausgangspulver, Nitridierung und anschließendes heißisostatisches Nachverdichten erhalten wird. Als keramisches Ausgangspulver wird eine Mischung aus Siliciumpulver, 2 bis 6 % Aluminiumoxid und 5 bis 15 % eines Seltenerdeoxids verwendet, die in einem C₁-C₄-Alkohol als Dispergiermedium auf eine mittlere Korngröße von 0,9 bis 5,0 µm, vorzugsweise 1,0 bis 3,0 µm, aufgemahlen und anschließend getrocknet wird. Die Viskosität der Pulver/Alkohol-Dispersion wird dabei auf Werte von 10 bis 50 mPa·s, vorzugsweise 25 bis 35 mPa·s, eingestellt.

## Beschreibung

Siliciumnitrid, Si₃N₄, ist aufgrund seiner hervorragenden Eigenschaften - hohe mechanische Festigkeit, Härte, Korrosions-, Thermoschock- und Oxiationsbeständigkeit - ein wichtiger Werkstoff für zahlreiche Anwendungen im Maschinenbau.

Bei der Herstellung von Bauteilen aus Si₃N₄-Keramik kann man prinzipiell zwei Wege unterscheiden: die Herstellung von Grünkörpern aus Si₃N₄-Pulver und nachfolgende Sinterung sowie die Herstellung von Grünkörpern aus pulverförmigem elementarem Silicium, anschließende Nitridierung zum sogenannten RBSN ("reaction bonded silicon nitride") und nachfolgender heißisostatischer Sinterung zum HIPRBSN ("hot isostatically pressed reaction bonded silicon nitride"). Die vorliegende Erfindung bezieht sich auf den Weg über das RBSN.

Aufgrund der starken interatomaren, weitgehend kovalenten Bindungskräfte im Siliciumnitrid läßt sich dieser Werkstoff nicht durch reines Festkörpersintern (Korngrenzen- oder Gitterdiffusion) verdichten. Deshalb lassen sich dichte Si₃N₄-Werkstoffe nur durch Zugabe von sinterfördernden Stoffen erzielen. Diese werden zusammen mit dem Ausgangs-Keramik-Pulver verarbeitet, wobei auf eine möglichst homogene Verteilung der Sinteradditive geachtet werden muß.

Die Mikrostruktur und die pysiko-chemischen sowie die mechanischen Eigenschaften gesinterter Si₃N₄-Materialien sind in hohem Maße von den Eigenschaften der Ausgangspulver abhängig. Generell ist man sich in der Fachliteratur darüber einig, daß eine homogene Mikrostruktur mit stabförmigen, ineinander verzahnten beta-Kristalliten Voraussetzung für eine hohe mechanische Festigkeit des Werkstoffes ist. Ein wesentlicher Einfluß auf die Morphologie der resultierenden beta-Kristallite wird dabei dem Anteil an alpha-Si₃N₄ im Ausgangspulver zugeschrieben. Enthält das Ausgangspulver einen hohen Anteil an beta-Phase, werden gelöste beta-Partikel kontinuierlich an gröberen beta-Partikeln bei nahezu Gleichgewichtsbedingungen wiederausgeschieden, was zur Ausbildung von großen äquiaxialen beta-Kristalliten führt. Bei niedrigem beta-Anteil führt die Auflösung der alpha-Partikel zu lokalen Übersättigungserscheinungen. Dies hat spontane Keimbildung zur Folge und führt zur Kristallisation langgestreckter, stäbchenförmiger beta-Kristallite, weit entfernt von den thermodynamischen Gleichgewichtsbedingungen. Da, wie erwähnt, die verzahnten stäbchenförmigen Kristallite zu hohen mechanischen Festigkeiten führen, ist nach gängiger Literaturmeinung ein möglichst hoher Anteil an alpha-Phase im Ausgangsmaterial wünschenswert.

Bauteile aus HIPRBSN werden bisher nach folgendem Verfahren hergestellt: Formgebung der keramischen Ausgangspulver (Silicium und Sinterhilfsmittel), Nitridierung und heißisostatische Nachverdichtung auf annähernd theoretische Dichte. Als Sinterhilfsmittel werden Seltenerdoxide wie Yttriumoxid und Aluminiumoxid eingesetzt. Die Ausgangsmassen für die Formgebung werden durch Einbringen der einzelnen Pulver in eine wässrige Verflüssigerlösung (Schlickerguß, Schlickerdruckguß) oder in eine organische Plastifizierungsmasse (Spritzguß) hergestellt. Nach dieser Methode hergestellte Bauteile erreichen jedoch nur eine Raumtemperatur-Vierpunktbiegefestigkeit von maximal 650 MPa.

Der Erfindung liegt die Aufgabe zugrunde, Bauteile auf Basis Si₃N₄ für den Einsatz im Motorenbau (Gasturbinenteile, Ventile u.ä.) aus heißisostatisch nachverdichtetem reaktionsgebundenem Siliciumnitrid nach verschiedenen Formgebungsverfahren herzustellen, die gegenüber dem Stand der Technik eine verbesserte Festigkeit aufweisen. Diese Aufgabe wurde in der Weise gelöst, daß man die keramischen Ausgangspulver auf eine bestimmte mittlere Korngröße mahlt.

Gegenstand der Erfindung ist ein hochfestes Formteil aus Siliciumnitrid-Keramik erhalten durch Formgebung der keramischen Ausgangspulver, Nitridierung und heißisostatisches Nachverdichten, wobei man als keramisches Ausgangspulver eine Mischung aus Siliciumpulver, 2 bis 6 % Aluminiumoxid und 5 bis 15 % eines Seltenerdeoxids, jeweils bezogen auf die Menge an Silicium, verwendet, die in einem C₁-C₄-Alkohol als Dispergiermedium auf eine mittlere Korngröße von 0,9 bis 5,0 µm, vorzugsweise 1,0 bis 3,0 µm, aufgemahlen und anschließend getrocknet wurde, wobei die Viskosität der Pulver/Alkohol-Dispersion auf Werte von 10 bis 50, vorzugsweise 25 bis 35 mPa·s eingestellt wurde.

Die Ausgangsprodukte zur Herstellung des erfindungsgemäßen Formteils aus Keramik-Material sind zum einen Siliciumpulver und zum anderen eine Mischung aus Aluminiumoxid und Seltenerdeoxide, wie beispielsweise CeO₂, Nd₂O₃, Yb₂O₃ oder Y₂O₃. Diese Oxide dienen als Sinteradditive und werden in den oben angegebenen Mengen eingesetzt, wobei die Prozentangaben sich sämtlich auf die Menge an Siliciumpulver beziehen und Gewichtsprozente bedeuten. Das Siliciumpulver kann, bedingt durch eine natürliche oder eine thermisch verstärkte Passivierung der Oberflächenschicht SiO₂ in einer Menge bis zu 5 % enthalten.

Die Mischung dieser Pulver wird dann einer Naßmahlung in Form einer Dispersion in einem C₁-C₄-Alkohol, vorzugsweise Isopropanol oder Ethanol, unterworfen. Um die gemäß der vorliegenden Erfindung gestellte Aufgabe, nämlich die Herstellung eines hochfesten Formteils aus Si₃N₄-Keramik, zu lösen, ist es von Bedeutung, daß bei dieser Mahlung eine bestimmte Viskosität der Pulverdispersion eingehalten wird und daß eine Mahlung auf eine mittlere Korngrößenverteilung von 0,9 bis 5,0, vorzugsweise 1,0 bis 3,0 µm (d50-Werte) erfolgt.

Die Erreichung der optimalen Viskosität des Mahlschlickers hängt im wesentlichen ab von dem Volumenverhältnis Mahlschlicker/Mahlkörper, vom Füllgrad der Mühle, vom absoluten Mühlenvolumen, von der Umfangsgeschwindigkeit der Mühle und von der Mahldauer.

Das Massen-Verhältnis von Pulvermischung zu Dispergiermedium wird dabei von der sich bei der Mischung einstellenden Viskosität der Mahldispersion abhängig gemacht. Dies geschieht in folgender Weise:

In Vorversuchen wurde Silicium-Pulver mit 3,2 % Al₂O₃ und 8,0 % Y₂O₃ als diejenige Zusammensetzung ermittelt, die die beste Mahlwirkung erzielt. Ein optimales Pulver/Dispergiermittel-Verhältnis für diese Mischung lag bei 60 Gew.-% / 40 Gew.-%. Von dieser Dispersion wurde nun mittels Rotationsviskosimetrie die Viskosität bei der Schergeschwindigkeit, die der Umfangsgeschwindigkeit der zur Mahlung benutzten Kugelmühle entspricht, ermittelt. Bei Mischungen anderer Zusammensetzung wird nun das Pulver/Dispergiermittel-Verhältnis so eingestellt, daß sich bei dieser Schergeschwindigkeit des Rotationsviskosimeters die gleiche Viskosität ergibt, wie bei der Referenzzusammensetzung.

Die Mahlung erfolgt vorzugsweise in einer Kugelmühle, die dabei zu 80 % ihres Volumens gefüllt ist, wobei 30 % des Gesamtvolumens von den Mahlkugeln eingenommen werden (Schüttung 50 %, davon 40 % Hohlräume). 50 % des Mühlenvolumens werden mit dem Schlicker gefüllt. Die Mühle ist also insgesamt zu 80 Vol.-% gefüllt. Die Mahldauer beträgt im allgemeinen 12 bis 72 Stunden.

Nach der Mahlung wird das Dispergiermedium mittels einer geeigneten Methode (z.B. Rotationsverdampfer) entfernt. Der entstandene Mahlkuchen wird dann noch zur Desagglomerierung trocken nachgemahlen, beispielsweise in einer Kugelmühle während 2 Stunden.

Alternativ zu dieser Naßmahlung kann auch eine Trockenmahlung durchgeführt werden. Dies kann ebenfalls in einer Kugelmühle, die zur Hälfte mit Al₂O₃-Kugeln gefüllt ist, erfolgen. Die zugesetzte Pulvermenge beträgt dabei vorzugsweise 0,4 kg pro I Volumen der Mühle. Der Mischung werden noch 0,1 % (bezogen auf die Pulvermasse) Isopropanol als Antiagglomerationsmittel zugegeben. Die Mahldauer beträgt auch in diesem Fall zwischen 12 h und 72 h.

Die gemahlene Pulvermischung wird dann noch in einem Umluft-Trockenschrank bei einer Temperatur von 200 bis 300 °C während 2 bis 48 h ausgeheizt. Das Ausheizen dient der Entfernung der letzten Reste des Dispergiermediums sowie zur Erzeugung einer passivierenden SiO₂-Schutzschicht auf den Silicium-Partikeln, so daß derart behandelte Pulver beim Einsatz für den wässrigen Schlickerguß eine geringere Hydrolyse-Empfindlichkeit aufweisen. Für die Formgebungsverfahren Spritzguß und isostatisches Pressen reicht eine Ausheizzeit von 2 h. Die Formgebung dieser Pulvermischungen erfolgt dann nach an sich bekannten Verfahren durch Schlickerguß, Schlickerdruckguß, isosta tisches Pressen oder durch Spritzguß.

Daran schließt sich die Nitridierung an, die in üblicher Weise bei Temperaturen von etwa 1050 bis 1450 °C, vor zugsweise 1100 bis 1370 °C, durchgeführt wird. Hierbei entsteht ein RBSN Produkt, das, bedingt durch die vorgeschaltete Aufmahlung der eingesetzten Keramikpulver, einen hohen Anteil (ca. 30 bis 100 %) an beta-Phase aufweist, was bei den RBSN Produkten nach dem Stand der Technik, bei denen eine solche Mahlung fehlt, nicht der Fall ist. Diese RBSN Produkte werden dann nach üblichen Verfahren heißisostatisch nachverdichtet.

### Beispiel 1:

Eine 10 l fassende Porzellanmühle wird zur Hälfte mit Aluminiumoxidkugeln (Dichte 3,55 g/cm³) gefüllt (das effektive Volumen der Kugeln beträgt 3 l, die Masse 10,65 kg). Weiterhin werden 3,975 kg Pulvermischung und 2,650 kg Isopropanol zugegeben (Dichte der entstandenen Suspension: 1,325 g/cm³; dies ergibt ein Volumen von 5,0 l). Die Pulvermischung besteht aus 3,5 kg Silicium-Pulver mit der Bezeichnung ® Sicomill 4C-P, das bei der Firma Permascand in Schweden erhältlich ist, 0,310 kg Aluminiumoxidpulver das unter der Bezeichnung ® Alcoa XA 1000 SG bei der Firma Alkoa GmbH in Hamburg erhältlich ist, 0,125 kg Yttriumoxidpulver und 40 g Eisenoxidpulver (dient als Nitrierungshilfe). Die Viskosität dieser Suspensionen beträgt 30 mPa·s.

Die geschlossene Mühle wird bei einer konstanten Drehzahl von 60 rpm 24 Stunden lang ohne Unterbrechung in Betrieb gehalten. Das danach erhaltene Pulver wurde in üblicher Weise einer Formgebung zu einem geeigneten Prüfkörper, Nitridierung und heißisostatischer Nachverdichtung unterworfen. Nach der Nitridierung beträgt der beta-Anteil im RBSN 58 %, bestimmt nach der Methode der Pulverdiffraktometrie (Röntgenbeugung). Das so erhaltene Formte wurde bei einer Temperatur von 1840 °C heißisostatisch nachverdichtet. Dann wurde seine Vierpunkt-Biegefestigkeit gemäß DIN 51110 (Entwurf, Teil I) gemessen, die 870 MPa betrug.

### Beispiel 2:

Es wurde in gleicher Weise wie in Beispiel 1 gearbeitet, jedoch Verwendung eines anderen Silicium-Pulvers (Elkem Silgrain Standard, - 6 µm). Durch den Eisenanteil in diesem Pulver erübrigt sich der Zusatz von Eisenoxid, die übrigen Zusätze entsprechen dem Beispiel 1. Um die gewünschte Viskosität der Suspension von 30 mPa·s zu erhalten, muß der Feststoffgehalt auf 42 Gew.-% reduziert werden (Gesamtvolumen der Suspension, wie im Beispiel 1, 5,0 l). Nach der Nitridierung beträgt der beta-Anteil im RBSN 54%. Eine heißisostatische Nachverdichtung bei 1840 °C führt zu Vierpunkt-Biegefestigkeiten von 880 MPa. Die entsprechende Nachverdichtung bei einer höheren Temperatur von 1860 °C liefert ein Formteil mit einer Vierpunkt-Biegefestigkeit von 970 MPa.

## Patentansprüche

1. Hochfestes Formteil aus Siliciumnitrid-Keramik erhalten durch Formgebung der keramischen Ausgangspulver, Nitridierung und heißisostatisches Nachverdichten, dadurch gekennzeichnet, daß man als keramisches Ausgangspulver eine Mischung aus Siliciumpulver, 2 bis 6 % Aluminiumoxid und 5 bis 15 % eines Seltenerdeoxids, jeweils bezogen auf die Menge an Silicium, verwendet, die in einem C₁-C₄-Alkohol als Dispergiermedium auf eine mittlere Korngröße von 0,9 bis 5,0 µm, vorzugsweise 1,0 bis 3,0 µm, aufgemahlen und anschließend getrocknet wurde, wobei die Viskosität der Pulver/Alkohol-Dispersion auf Werte von 10 bis 50 mPa·s, vorzugsweise 25 bis 35 mPa·s, eingestellt wurde.

2. Formteil nach Anspruch 1, dadurch gekennzeichnet, daß als Seltenerdeoxid CeO₂, Nd₂O₃, Yb₂O₃, Y₂O₃ oder Mischungen von diesen eingesetzt werden.

3. Formteil nach Anspruch 1 oder 2, dadurch gekennzeichnet, daß als Dispergiermedium Isopropanol oder Ethanol verwendet wird.

4. Formteil nach einem der Ansprüche 1 bis 3, dadurch gekennzeichnet, daß es nach der Formgebung und der Nitridierung einen Anteil an beta-Phase in Bereich von 30 bis 100 %, vorzugsweise von 50 bis 100 %, aufweist.

5. Formteil nach einem der Ansprüche 1 bis 4, dadurch gekennzeichnet, daß es eine Vierpunkt-Biegefestigkeit von größer als 700 Mpa, vorzugsweise größer als 800 MPa, besitzt.

6. Verwendung eines Formteils nach einem der Ansprüche 1 bis 5 als Ventil in Verbrennungsmotoren.

7. Verwendung eines Formteils nach einem der Ansprüche 1 bis 5 als Gasturbinenteil in Turboladern von Hochleistungsmotoren.
